# EUROPEAN PATENT APPLICATION

(11) **EP 4 485 241 A1**
(43) Date of publication of application: **01.01.2025**
(21) Application number: 24184157.6
(22) Date of filing: 25.06.2024
(51) Int. Cl.: G06F 21/44, G06F 21/51

(54) **METHOD AND APPARATUS FOR VERIFYING APPLICATIONS**

(30) Priority: 29.06.2023 US 202363511077 P
(71) Applicant: Nagravision Sàrl, 1033 Cheseaux-sur-Lausanne (CH)
(72) Inventor: HAMIEL, Nathan, 1033 Cheseaux-sur-Lausanne (CH); SPANIER, Ryan, 1033 Cheseaux-sur-Lausanne (CH); MEMON, Jamshed, 1033 Cheseaux-sur-Lausanne (CH)
(74) Representative: Novagraaf International SA

(57) **Abstract**

A method for verifying an application deployed on a network is provided. The method includes receiving, from a device of a first user, a verification request for verifying the application. The device is used by the first user to initiate an interaction with the application. The method further includes extracting, from the received verification request, a name and an address associated with the application. The method also includes searching in a database, based on at least one of the extracted name and address, for reference information associated with the application. The method also includes generating a verification response that is sent to the device of the first user, so as to alert the first user to a risk of interacting with the application.

## Description

### CROSS-REFERENCE TO RELATED APPLICATIONS

The present application claims priority to U.S. Provisional Application No. 63/511,077, filed June 29, 2023, which is incorporated herein by reference in its entirety for all purposes.

### BACKGROUND

### FIELD OF THE INVENTION

The present disclosure relates to enhanced security of applications, and specifically relates to verification of Web3 applications.

### DESCRIPTION OF THE RELATED ART

In the Web3/blockchain space, numerous issues primarily affect application users rather than application providers. This means that users frequently become targets of attacks such as phishing attempts. Unlike traditional phishing attacks, compromises in the Web3 space are often permanent and irreversible, making the stakes significant. For example, if users fall victim to a Web3 phishing attack, they may lose their digital assets permanently, without a realistic means of recovery. Especially in the case of cryptocurrencies, the potential losses can be very high.

### SUMMARY

The present disclosure describes an application verification method and apparatus that solves cybersecurity problems in the Web3 space. Specifically, the present disclosure describes an application verification method and apparatus with the following features.

In an exemplary aspect of the present disclosure, a method for verifying an application deployed on a network is provided. The method includes receiving, from a device of a first user, a verification request for verifying the application. The device is used by the first user to initiate an interaction with the application. The method further includes extracting, from the received verification request, a name and an address associated with the application. The method also includes searching in a database, based on at least one of the extracted name and address, for reference information associated with the application. The method also includes generating a verification response that is sent to the device of the first user, so as to alert the first user to a risk of interacting with the application.

In an exemplary aspect of the present disclosure, an apparatus for verifying an application deployed on a network includes circuitry configured to: receive, from a device of a first user, a verification request for verifying the application, the device being used by the first user to initiate an interaction with the application; extract, from the received verification request, a name and an address associated with the application; search in a database, based on at least one of the extracted name and address, for reference information associated with the application; and generate a verification response that is sent to the device of the first user, so as to alert the first user to a risk of interacting with the application.

In an exemplary aspect of the present disclosure, a non-transitory computer-readable medium stores a program that, when executed by processing circuitry, causes the processing circuitry to execute a method for verifying an application deployed on a network. The method includes receiving, from a device of a first user, a verification request for verifying the application. The device is used by the first user to initiate an interaction with the application. The method further includes extracting, from the received verification request, a name and an address associated with the application. The method also includes searching in a database, based on at least one of the extracted name and address, for reference information associated with the application. The method also includes generating a verification response that is sent to the device of the first user, so as to alert the first user to a risk of interacting with the application.

Note that this summary section does not specify every embodiment and/or incrementally novel aspect of the present disclosure or claimed invention. Instead, the summary only provides a preliminary discussion of different embodiments and corresponding points of novelty. For additional details and/or possible perspectives of the disclosure and embodiments, the reader is directed to the Detailed Description section and corresponding figures of the present disclosure as further discussed below.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a block diagram of an exemplary architecture of a Web3 application verification scheme, according to embodiments of the disclosure;
FIG. 2 is a block diagram of an application verification server 110 according to exemplary aspects of the present disclosure;
FIG. 3 is a block diagram of a registry entry generator 220 according to exemplary aspects of the present disclosure;
FIG. 4 is a flow chart of a registry entry generation procedure 400 according to exemplary aspects of the present disclosure;
FIG. 5 is a block diagram of a registration request processer 240 according to exemplary aspects of the present disclosure;
FIG. 6 is a flow chart of a registration request processing procedure 600 according to exemplary aspects of the present disclosure;
FIG. 7 is a block diagram of an application verification request processer 260 according to exemplary aspects of the present disclosure;
FIG. 8 is a flow chart of an application verification request processing procedure 800 according to exemplary aspects of the present disclosure;
FIG. 9 is a block diagram of a query processer 280 according to exemplary aspects of the present disclosure;
FIG. 10 is a flow chart of a query processing procedure 1000 according to exemplary aspects of the present disclosure;
FIG. 11 is a block diagram of a trustworthiness evaluator 290 according to exemplary aspects of the present disclosure;
FIG. 12 is a flow chart of a trustworthiness evaluation procedure 1200 according to exemplary aspects of the present disclosure;
FIG. 13 is an exemplary block diagram of a system that may form one or more of the blocks illustrated in FIG. 1; and
FIG. 14 is a hardware diagram of a computing device according to exemplary aspects of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting.

For example, the order of discussion of the different steps as described herein has been presented for the sake of clarity. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

Furthermore, as used herein, the words "a," "an," and the like generally carry a meaning of "one or more," unless stated otherwise.

It is normally difficult for a user to determine whether they are interacting with a legitimate application or not. For example, there are no automatic notifications to warn users of a condition that would lead them to become aware that they are interacting with a malicious application. Instead, the only way for a user to verify the validity of an application is through a manual process, which is often error-prone and time-consuming. Even worse, this process can become dangerous when the "official" communication channels from the project have been compromised.

For example, wallet applications in the Web3/blockchain space typically lack even simple security checks. For instance, such an application does not warn a user when the address of a program has changed since their last interaction. While changes in the application address may be legitimate, it could also indicate an attack and put the user at risk. By failing to implement this simple check, users are left unaware of any potential threats.

The severity of the problem is magnified by the fact that there is not just one, but hundreds of blockchains, each hosting thousands of applications. Additionally, each blockchain can have its own unique deployment quirks and wallet differences. This inherent complexity makes it relatively easy for malicious actors to exploit vulnerabilities in applications and phish unsuspecting users.

Therefore, approaches for verifying Web3 applications are desirable to address these and other deficiencies of current systems.

This disclosure relates to a method and apparatus for verifying Web3 applications. The method and apparatus provide application owners or developers, regardless of the underlying blockchains, with a platform for safeguarding their users against attacks and scams, including but not limited to phishing and impersonation attempts. Consequently, users can engage with these applications with heightened confidence, knowing they are interacting with legitimate sources, and the success rate of phishing attacks can be eliminated.

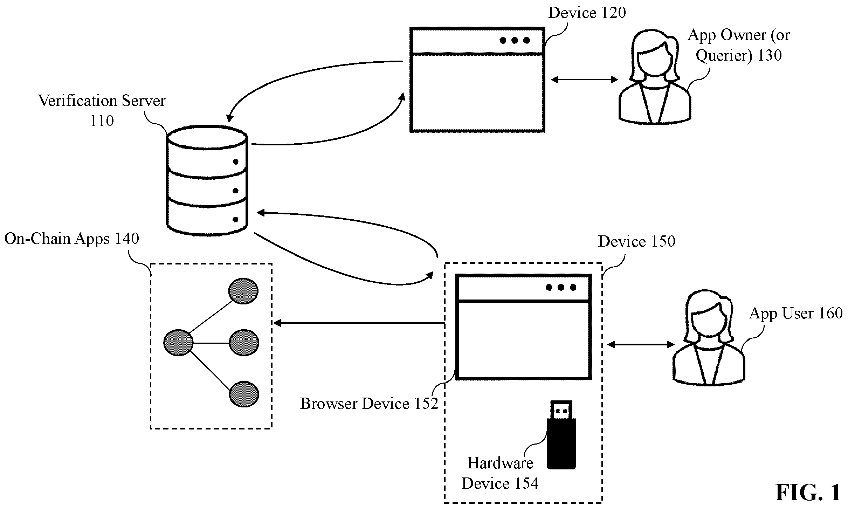

FIG. 1 shows a block diagram of an exemplary architecture of a Web3 application verification scheme, according to embodiments of the disclosure. In order to address security concerns in a multi-chain fashion, the verification scheme adopts an off-chain approach. A verification server 110 is used to store all of the trusted and secure addresses associated with applications, no matter on what blockchains these applications are hosted. The verification server 110 does not operate on any specific blockchain.

For instance, the verification server 110 in FIG. 1 can be implemented as an oracle that tracks applications and their respective addresses. A database or repository (not shown in FIG. 1) accessible to the verification server 110 can maintain records of application information, such as names, smart contract addresses, API endpoints, etc. The verification server 110 can collect relevant information from various data sources and create such records. Furthermore, application providers are allowed to register their applications with the verification server 110, in order to build trust between the applications and end users. For example, via a device 120 having a web interface, an application owner 130 can authenticate their identity and conduct the registration.

Through the operations described above, the verification server 110 creates a centralized truth table that can be accessed by multiple parties. For instance, when an application user 160 uses a device 150 to initiate an interaction with an on-chain application 140, a verification request can be sent from the device 150 to the verification server 110. The verification server 110 can generate a verification result and return it to the device 150. The device 150 can be a browser device 152, a hardware device 154, or similar tools used for Web3 interactions. Digital wallets are a typical example of the device 150.

Additionally, through a user-friendly web interface, people can easily look up information from the verification server 110. For example, via the device 120 with the web interface, the application owner 130 can access the server 110 to query information associated with applications. Other queriers, including but not limited to an application user, an admin, etc., also can use their devices having web interfaces to input search requests and receive query results from the verification server 110.

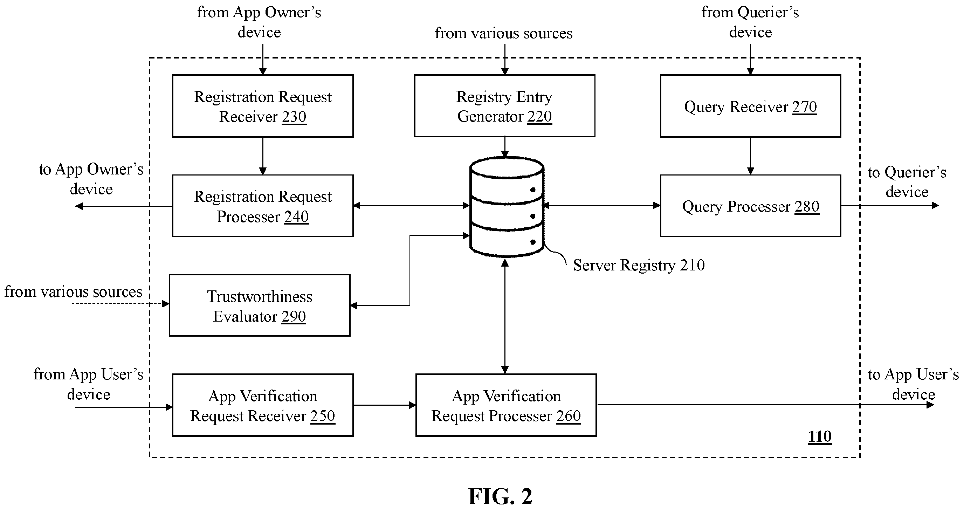

FIG. 2 is a block diagram of an application verification server 110 according to exemplary aspects of the present disclosure. The verification server 110 can include a server registry 210 that stores registry entries with respect to applications, along with a registry entry generator 220 that generates the registry entries based on data collected from various sources. Note that although the server registry 210 is shown as being integrated in the verification server 110, it can be separate from and coupled to the verification server 110.

Further, the verification server 110 includes a registration request receiver 230 and a registration request processer 240. The registration request receiver 230 receives a registration request from a device (not shown in FIG. 2) of an application owner, and relays the registration request to the registration request processer 240. The registration request processer 240 can process the registration request and update the server registry 210 accordingly. A registration result generated by the registration request processer 240 can be returned to the application owner's device. This result can inform the application owner about the status of the registration, such as whether it has been successfully completed or if the registration request has been denied.

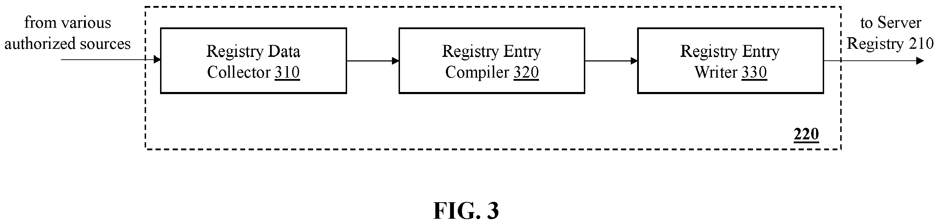

The application verification server 110 also includes an application verification request receiver 250, an application verification request processer 260, a query receiver 270, a query processer 280, and a trustworthiness evaluator 290. The application verification request receiver 250 receives an application verification request from an application user's device (not shown) and sends the request to the application verification request processer 260. The query receiver 270 receives a query from a querier's device (not shown) and sends the query to the query processer 280. The structures and functions of the registry entry generator 220, the registration request processer 240, the application verification request processer 260, the query processer 280, and the trustworthiness evaluator 290 will be described below referring to FIGs. 3-12.

FIG. 3 is a block diagram of the registry entry generator 220 according to exemplary aspects of the present disclosure. The registry entry generator 220 includes a registry data collector 310, a registry entry compiler 320, and a registry entry writer 330.

Information pertaining to applications can be scattered across various sources on the network. For instance, application providers' official websites may provide valid addresses of the applications, government agencies may release lists of sanctioned applications, and application users have the option to report fraudulent or threatening activities to regulatory authorities. When multiple users have flagged a particular application or application address as a scam, there is a high possibility that the application or address is malicious. Due to the enormous volume and dispersed distribution of such information, it is challenging for application users to manually processing it. The registry data collector 310 can address this challenge by collecting the scattered information.

Based on the data collected by the registry data collector 310, the registry entry compiler 320 can compile registry entries, which will be sent to the registry entry writer 330. The registry entry writer 330 can write the compiled registry entries into the server registry 210, enabling the provision of verification services to application users.

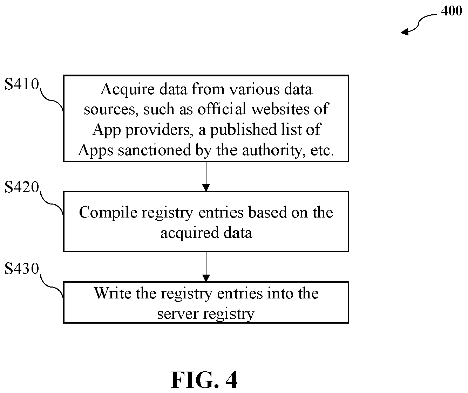

FIG. 4 is a flow chart of a registry entry generation procedure 400 according to exemplary aspects of the present disclosure. In step S410, data is acquired from various data sources, such as application providers' official websites, government-published lists of sanctioned applications, etc. Then, in step S420, registry entries can be compiled based on the acquired data. In step S430, the compiled registry entries are written into the server registry 210.

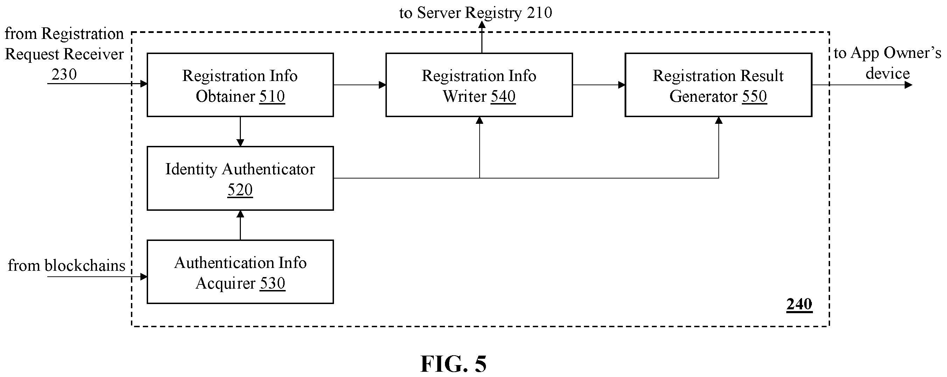

Application providers also can be an important information source of the server registry 210. To protect potential users against phishing attacks, application providers can register their applications with the verification server 110. FIG. 5 is a block diagram of the registration request processer 240 according to exemplary aspects of the present disclosure. The registration request processer 240 can include a registration information obtainer 510, an identity authenticator 520, an authentication information acquirer 530, a registration information writer 540, and a registration result generator 550.

The registration information obtainer 510 obtains registration information from the registration request sent by the registration request receiver 230. The authentication information acquirer 530 acquires authentication information from the Web3 space, for example, the blockchains. Based on the authentication information, the identity authenticator 520 can assess whether the registration request originates from an authorized party.

In an exemplary embodiment, the obtained registration information can include information regarding the application to be registered, as well as the identity information of the party submitting the registration request. In this case, the identity authenticator 520 can perform verification by comparing the identity information with the acquired authentication information.

In another embodiment, the public/private key pair mechanism can be used for identity authentication. This approach mandates the registration of an application to utilize the same public/private key pair that was used when the application was deployed in the Web3 space.

For example, a challenge-response protocol can be implemented to establish ownership. This requires the party submitting the registration request to successfully respond to a specific challenge presented by the identity authenticator 520.

As another example, the party submitting the registration requestion needs to encrypt the registration information using the correct private key. This encrypted data can serve as evidence of their ownership and authenticates their authority to register the application.

In short, only those who can prove that they own the corresponding private key of the public/private key pair used during application deployment are allowed to register the application with the verification server 110. Additionally, in scenarios where multiple owners may be involved, an additional layer of security can be added by setting a threshold of owners required for registration and any subsequent changes, for example.

Upon successful authentication by the identity authenticator 520, the registration information writer 540 can write the registration information into the server registry 210. Accordingly, the registration result generator 550 can generate a registration result, and sends it to the application owner's device. The registration result can inform the application owner that the registration information has been accepted and stored in the server registry 210, or that the registration request has been denied, for example.

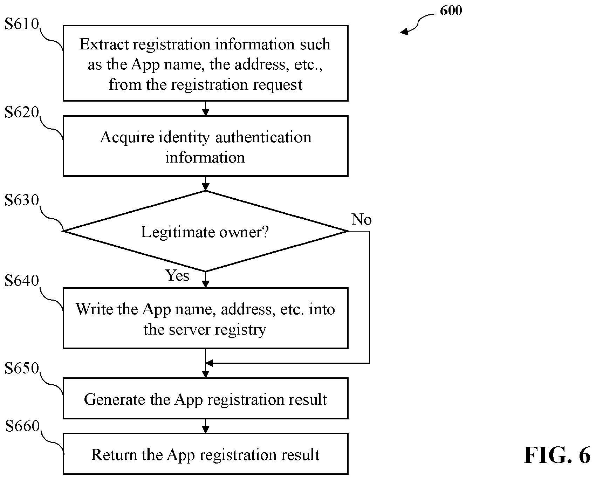

FIG. 6 is a flow chart of a registration request processing procedure 600 according to exemplary aspects of the present disclosure. In step S610, registration information can be extracted from the registration request sent from the application owner's device. The registration information can include the name of the application, a specific address (e.g., a uniform resource locator (URL)) for accessing the application, a smart contract address associated with the application, an API endpoint associated with the application, etc.

In step S620, identity authentication information can be acquired from the Web3 space. As mentioned above, the identify authentication information can be the public key of the public/private key pair used during the deployment of the application on the blockchain, for example.

In step S630, a determination is made to assess whether the registration request is from the legitimate owner of the application. If the determination confirms the legitimacy of the application owner, in step S640, the registration information (such as the application name and the related address, etc.) is written into the server registry 210. Otherwise, the process 600 skips to step S650.

Based on the processing result of step S630 and/or step S640, an application registration result can be generated accordingly in step S650. In step S660, the registration result is returned to the application owner's device.

Using the registration entries generated by the registry entry generator 220 and/or the application information registered by application owners, the verification server 110 can provide application verification services to application users. For example, the application addresses registered by the application owners and those specified by authorized sources (e.g., official websites) can be considered as trusted addresses. These addresses are deemed safe for users to interact with. In contrast, the applications and relevant addresses that have been sanctioned by regulatory authorities or flagged as malicious by multiple users can be identified as potential scams.

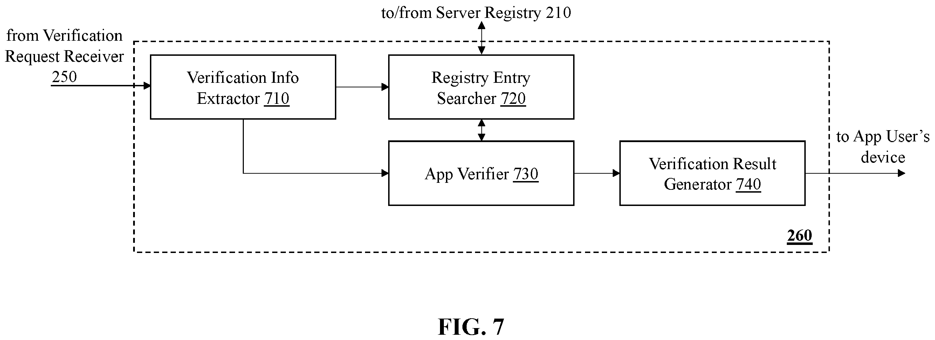

FIG. 7 is a block diagram of an application verification request processer 260 according to exemplary aspects of the present disclosure. The application verification request processer 260 includes a verification information extractor 710, a registry entry searcher 720, an application verifier 730, and a verification result generator 740.

When receiving an application verification request from the verification request receiver 250, the verification information extractor 710 extracts verification information from the received verification request, and sends the extracted verification information to the registry entry searcher 720. For example, the verification information can be an application name and/or an address (e.g., a URL used to access the application) associated with the application, etc.

Based on the received verification information, the registry entry searcher 720 searches within the server registry 210 to identify any records or entries linked with the verification information. Based on the search results obtained, the application verifier 730 determines if the application (or the address) is potentially fraudulent or a scam. Accordingly, the verification result generator 740 generates a verification result, which can be returned to the application user's device (not shown in FIG. 7) to alert them about the potential risks involved in interacting with the application and/or the application address.

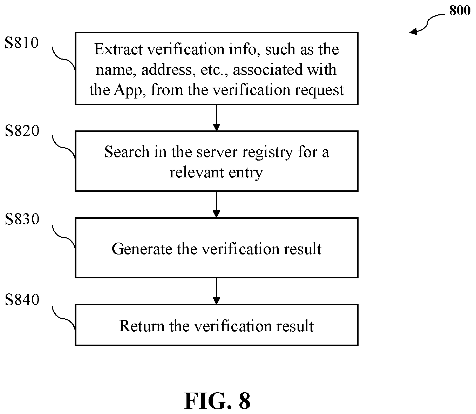

FIG. 8 is a flow chart of an application verification request processing procedure 800 according to exemplary aspects of the present disclosure. The procedure 800 starts from step S810, where verification information is extracted from the verification request. The extracted verification information can include the application name and/or its corresponding address (e.g., the URL to be accessed).

In step S820, the server registry 210 is searched using the extracted verification information to identify any relevant entries or records. For instance, a search based on the application name can locate records within the server registry 210 that include trusted addresses associated with that particular application name. Similarly, performing a search using the application name and/or the application address as criteria may retrieve records within the server registry 210 that classify the application name or application address as potential scams or suspicious entities.

In step S830, the verification result is generated based on the search processing. For example, if no trusted addresses associated with the application are found in the server registry 210, or if the located trusted address differs from the extracted application address, or if the extracted application name or extracted application address is marked as suspicious in the retrieved records or entries, a verification result is generated to alert the user about potential risks involved in interacting with the application. In step S840, the generated verification result is returned to the application user's device.

In an exemplary embodiment, when a user uses a browser wallet to initiate an interaction with an application, the wallet connects to the API of the verification server 110 to verify the application that the user intends to interact with. If the application has not been registered, or if the application address is different from the registered/published address saved in the server registry 210, a warning can be displayed via the browser wallet, notifying the user that they may be about to interact with an unsafe application address.

As mentioned above, the verification server 110 provides a user-friendly web interface that enables easy access to information stored in the server registry 210. This allows application users to conveniently check the trustworthiness of the applications they wish to engage with, even before initiating any actual interactions with those applications. Additionally, the web interface facilitates easy access to the server registry 210 for various parties, including but not limited to application owners and admins. People have the freedom to use a wide range of query conditions to search for information of interest within the server registry 210. For instance, they can inquire about recently reported suspicious applications, applications that have been sanctioned by government authorities, the currently trusted address of a particular application, and historical records tracking changes in the application's address over time, etc.

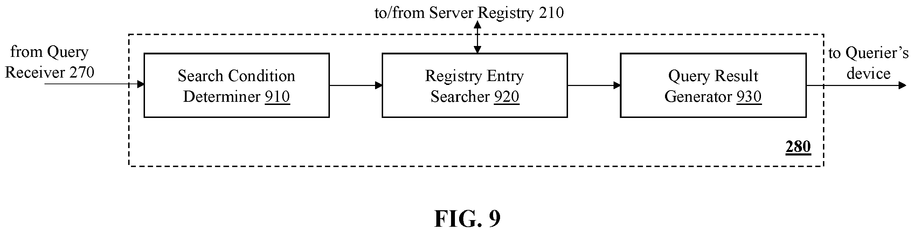

FIG. 9 is a block diagram of a query processer 280 according to exemplary aspects of the present disclosure. The query processer 280 includes a search condition determiner 910, a registry entry searcher 920, and a query result generator 930. The search condition determiner 910 receives a query from the query receiver 270 and determines a specific search condition based on the received query. Once determined, the search condition is sent to the registry entry searcher 920.

Based on the determined search condition, the registry entry searcher 920 searches in the server registry 210 and obtains search results. The query result generator 930 receives the search results from the registry entry searcher 920, and processes them to generate a query result based on the search results, which is returned to the querier's device (not shown).

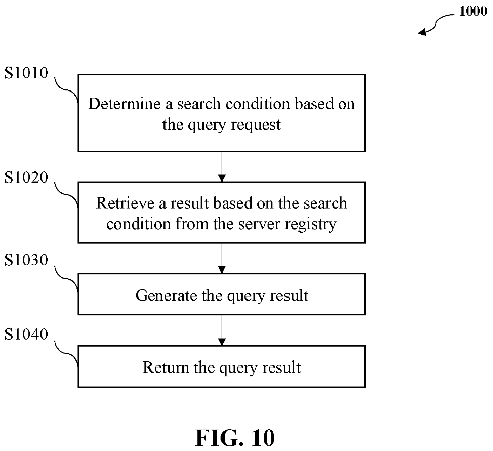

FIG. 10 is a flow chart of a query processing procedure 1000 according to exemplary aspects of the present disclosure. In step S1010, a search condition is determined based on the received request. For example, the request can be "Is the Application named X is suspicious?" Thus, the search condition can be determined according to the application's name, X.

In step S1020, search results can be retrieved from the server registry 210 based on the determined search condition. The search results can include the entries or records associated with the application name X.

In step S1030, a query result is generated based on the search results. In step S1040, the query result can be returned to the querier's device.

Over time, the server registry 210 can gather a substantial amount of information. This accumulated data can be used in assessing the reputation of the applications and/or application providers. For example, the trustworthiness of an application owner and their respective applications can increase with a larger number of applications or projects registered without any records of rug pulls, sanctions, etc. Similarly, a higher volume of transactions processed by an application (or through an application address) can enhance the trustworthiness of the application (or the address) and/or its owner. Alternatively or additionally, information can be collected from the network to further validate the reputation of the resources as well.

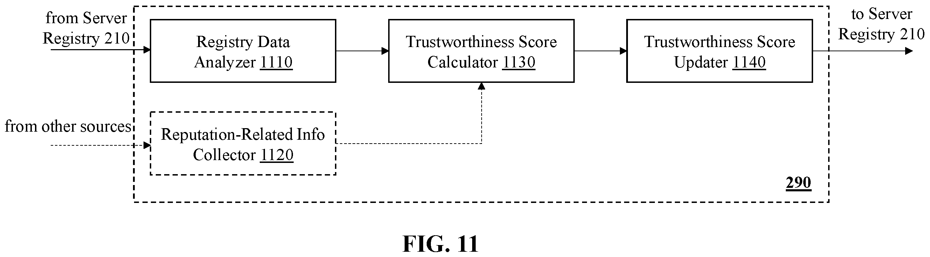

FIG. 11 is a block diagram of a trustworthiness evaluator 290 according to exemplary aspects of the present disclosure. The trustworthiness evaluator 290 includes a registry data analyzer 1110, an optional reputation-related information collector 1120, a trustworthiness score calculator 1130, and a trustworthiness score updater 1140.

The registry data analyzer 1110 can analyze the registry data stored in the server registry 210, and optionally, information collected by the reputation-related information collector 1120 from other sources. Based on the analysis, the trustworthiness score calculator 1130 calculates a trustworthiness score for the relevant applications (or application addresses, etc.). The trustworthiness score updater 1140 can update the server registry 210 based on the calculated trustworthiness scores.

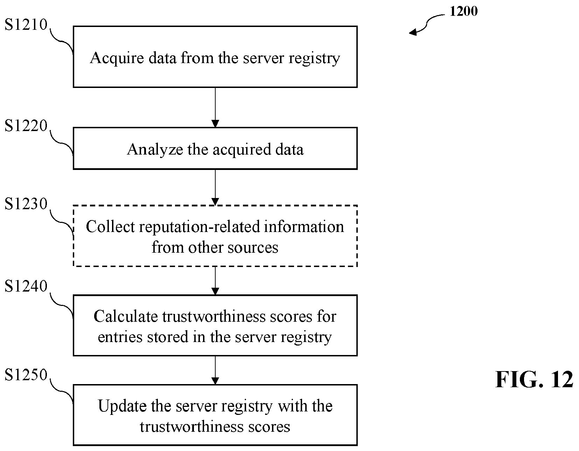

FIG. 12 is a flow chart of a trustworthiness evaluation procedure 1200 according to exemplary aspects of the present disclosure. In step S1210, data stored in the server registry 210 is acquired. In step S1220, the acquired data is analyzed. In the optional step S1230, reputation-related information can be collected from other sources. In step S1240, trustworthiness scores can be calculated for applications and/or addresses, based on the analysis of the acquired data and optionally, the collected reputation-related information. In step S1250, the server registry 210 can be updated with the calculated trustworthiness scores.

In an exemplary embodiment, a larger number of applications or projects registered by a specific application owner without any instances of rug pulls increases the trustworthiness of both the application owner and their applications. Similarly, a higher number of transactions flowing through an applications (or an application address) can contribute to a score that increases the trustworthiness of the application (or the address).

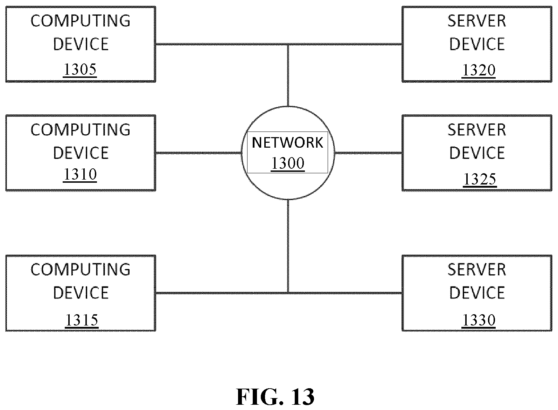

FIG. 13 is an exemplary block diagram of a system that may form one or more of the blocks illustrated in FIG. 1. For example, the system illustrated in FIG. 13 may correspond to the verification server 110, the device 120, any of the on-chain applications 140, or the device 150. In the event that any of the blocks in FIG. 1 are encompassed in a single system, that single system may be exemplified by the one illustrated in FIG. 13. For example, the device 120 and the device 150 may be part of a single system such as that of FIG. 13. Other combinations of the different blocks of FIG. 2A into a single system, such as that of FIG. 13, are also possible as can be appreciated.

The exemplary system illustrated in FIG. 13 includes a plurality of computing devices 1305, 1310, 1315 and a plurality of server devices 1320, 1325, 1330 interconnected by a network (for example, a local area network (LAN)) 1300. As can be appreciated, the network 1300 may be a packet-switch network that is private, public, or a combination of private and public. The network 1300 may also include wired and wireless portions, and may be connected to a public network, such as the Internet.

The computing devices 1305, 1310, 1315 can include desktop computers, laptop computers, tablet computers, mobile phones, thin clients, and any other known computing device. The computing devices 1305, 1310, 1315 may also have permanent, semi-permanent, or temporary connections to the network 1300. These connections may also be wired, such as an Ethernet connection, or may be wireless, such as a Wi-Fi, Bluetooth, or cellular connection (i.e., 3G, 4G, LTE, 5G, etc.). Though three computing devices 1305, 1310, 1315 are illustrated, the system of FIG. 13 may include any number of computing devices without limitation.

The server devices 1320, 1325, and 1330 are connected to the network 1300 via permanent connections, and may store data and may provide services to the computing devices 1305, 1310, 1315, such email, database services, and the like. In the system of FIG. 13, there may be more than three servers or fewer than three servers without limitation.

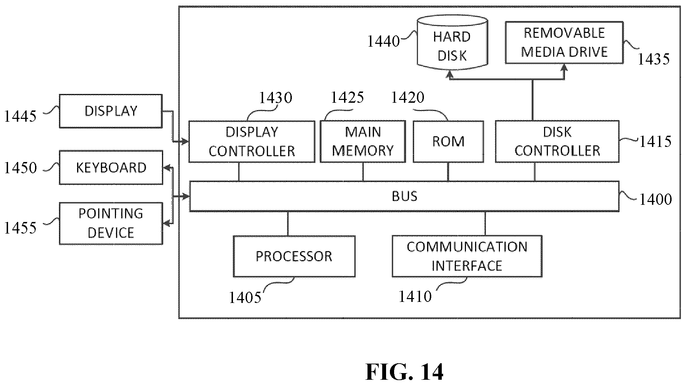

Next, a description of the hardware of computing devices 1305, 1310, 1315 and server devices 1320, 1325, 1330 is provided with reference to FIG. 14. In the event that the blocks illustrated in FIG. 1 correspond to individual devices, the hardware of those devices may also be as illustrated in FIG. 14. The device of FIG. 14 includes a processor 1405, communication interface 1410, main memory 1425, read only memory (ROM) 1420, disk controller 1415, display controller 1430, hard disk 1440, and removable media drive 1435.

The processor 1405 may be based on a reduced instruction set (RISC) circuit architecture, Von Neumann architecture, Harvard architecture, or any other processing circuit architecture that is known. The processor 1405 may also be implemented as a system on a chip, application specific integrated circuit (ASIC), field programmable gate array (FPGA), or with discrete logic circuit components. The processor 1405 may also be implemented in software that is executed on processing circuitry having any of the architectures described above.

The communication interface 1410 is a circuit that connects the device of FIG. 14 to one or more communication networks, such as an Ethernet network, a cellular network, a Wi-Fi network, a Bluetooth network, and the like. For example, the communication interface 1410 may be a network interface card (NIC).

The main memory 1425 and the ROM 1420 are used to store instructions and other data needed by the processor 1405 in order to carry out various tasks in accordance with exemplary aspects of the present disclosure. Specifically, the ROM 1430, being a read-only memory circuit, may include permanent instructions that do not require changes, such as lower-level routines. The main memory 1425 may include a combination of random access memory and erasable programmable read only memory (EPROM) in order to store programming instructions that may be periodically updated and data that may change periodically or frequently during as the processor 1405 executes instructions.

The display controller 1430 is an interface circuit that permits a display 1445, such as a liquid crystal display, to be connected to the device of FIG. 14 in order to provide visual information to a user thereof. The disk controller 1415 is an interface circuit that permits devices such as a hard disk 1440, which provides mass storage, to be connected to the bus 1000 and therefore, the processor 1405. The disk controller 1415 also permits the connection of other removable media 1435, such as an optical disk reader or a secure digital (SD) card, a memory stick and the like. A keyboard 1450 and a pointing device 1455, such as a mouse, may also be connected to the device illustrated in FIG. 14 to provide a way of entering data into the device by a user thereof. Further description of these components is omitted for the sake of brevity.

Obviously, numerous modifications and variations of the present invention are possible in light of the above teachings. It is therefore to be understood that within the scope of the appended claims, the invention may be practiced otherwise than as specifically described herein.

Embodiments of the present disclosure may also be as set forth in the following parentheticals.
(1) A method for verifying an application deployed on a network, comprising: receiving, from a device of a first user, a verification request for verifying the application, the device being used by the first user to initiate an interaction with the application; extracting, from the received verification request, a name and an address associated with the application; searching in a database, based on at least one of the extracted name and address, for reference information associated with the application; and generating a verification response that is sent to the device of the first user, so as to alert the first user to a risk of interacting with the application.
(2) The method of (1), wherein the searching further comprises retrieving, based on the extracted name, a trusted address associated with the application, and the generating further comprises, when no trusted address is retrieved, or the retrieved trusted address does not match the extracted address, generating the verification response, which warns the first user that interacting with the application is not safe.
(3) The method of (2), further comprising: receiving, from a device of a second user, a registration request associated with the application, the registration request including a particular address associated with the application; determining whether the second user is entitled to register the application; and in response to a positive determination result, updating the database by storing the particular address as the trusted address associated with the application.
(4) The method of (3), wherein the determining further comprises: acquiring, from the network, a public key of a public-private key pair with which the application was deployed on the network, determining, based on the acquired public key, whether the device of the second user uses a corresponding private key of the public-private key pair to prove that the second user has ownership of the application, and when the device of the second user uses the corresponding private key to prove the second user has the ownership of the application, determining that the second user is entitled to register the application.
(5) The method of (2), further comprising: obtaining, from an authorized source, a particular address associated with the application; and updating the database by storing the particular address as the trusted address associated with the application.
(6) The method of (1), wherein the searching further comprises retrieving, based on the extracted name or address, a record that labels the application as suspicious, and the generating further comprises generating, based on the retrieved record, the verification response, which warns the first user that interacting with the application is not safe.
(7) The method of (6), further comprising: obtaining, from an authorized source, information indicating that there is a risk to interact with the application; and updating the database by creating the record, which labels the application as suspicious.
(8) The method of (3), further comprising: calculating, based on an analysis of data in the database, a trustworthiness score associated with the application; and updating the database with the calculated trustworthiness score, as the reference information associated with the application.
(9) The method of (8), wherein the calculating further comprises calculating the trustworthiness score based on at least one of: a number of applications that have been registered by the second user, without a rug-pull event occurring on the applications, and a number of transactions that have been performed with the application, the larger the number of applications that have been registered by the second user without a rug-pull event is, the higher the trustworthiness score associated with the application is, and the larger the number of transactions that have been performed with the application is, the higher the trustworthiness score associated with the application is.
(10) The method of (1), further comprising: receiving, from a device of a third user, a query request with respect to the application; determining, based on the received query request, a search condition; searching in the database, based on the determined search condition, to generate a search result with respect to the application; and sending, to the device of the third user, the generated search result with respect to the application.
(11) An apparatus for verifying an application deployed on a network, comprising circuitry configured to: receive, from a device of a first user, a verification request for verifying the application, the device being used by the first user to initiate an interaction with the application, extract, from the received verification request, a name and an address associated with the application, search in a database, based on at least one of the extracted name and address, for reference information associated with the application, and generate a verification response that is sent to the device of the first user, so as to alert the first user to a risk of interacting with the application.
(12) The apparatus of (11), wherein the circuitry is further configured to: retrieve, based on the extracted name, a trusted address associated with the application, and when no trusted address is retrieved, or the retrieved trusted address does not match the extracted address, generate the verification response, which warns the first user that interacting with the application is not safe.
(13) The apparatus of (12), wherein the circuitry is further configured to: receive, from a device of a second user, a registration request associated with the application, the registration request including a particular address associated with the application, determine whether the second user is entitled to register the application, and in response to a positive determination result, update the database by storing the particular address as the trusted address associated with the application.
(14) The apparatus of (13), wherein the circuitry is further configured to: acquire, from the network, a public key of a public-private key pair with which the application was deployed on the network, determine, based on the acquired public key, whether the device of the second user uses a corresponding private key of the public-private key pair to prove that the second user has ownership of the application, and when the device of the second user uses the corresponding private key to prove the second user has the ownership of the application, determine that the second user is entitled to register the application.
(15) The apparatus of (12), wherein the circuitry is further configured to: obtain, from an authorized source, a particular address associated with the application, and update the database by storing the particular address as the trusted address associated with the application.
(16) The apparatus of (11), wherein the circuitry is further configured to: retrieve, based on the extracted name or address, a record that labels the application as suspicious, and generate, based on the retrieved record, the verification response, which warns the first user that interacting with the application is not safe.
(17) The apparatus of (16), wherein the circuitry is further configured to: obtain, from an authorized source, information indicating that there is a risk to interact with the application, and update the database by creating the record, which labels the application as suspicious.
(18) The apparatus of (13), wherein the circuitry is further configured to: calculate, based on an analysis of data in the database, a trustworthiness score associated with the application, and update the database with the calculated trustworthiness score, as the reference information associated with the application.
(19) The apparatus of (18), wherein the circuitry is further configured to calculate the trustworthiness score based on at least one of: a number of applications that have been registered by the second user, without a rug-pull event occurring on the applications, and a number of transactions that have been performed with the application, the larger the number of applications that have been registered by the second user without a rug-pull event is, the higher the trustworthiness score associated with the application is, and the larger the number of transactions that have been performed with the application is, the higher the trustworthiness score associated with the application is.
(20) The apparatus of (11), wherein the circuitry is further configured to: receive, from a device of a third user, a query request with respect to the application, determine, based on the received query request, a search condition, search in the database, based on the determined search condition, to generate a search result with respect to the application, and send, to the device of the third user, the generated search result with respect to the application.
(21) A non-transitory computer-readable medium storing a program that, when executed by processing circuitry, causes the processing circuitry to execute a method for verifying an application deployed on a network, the method comprising: receiving, from a device of a first user, a verification request for verifying the application, the device being used by the first user to initiate an interaction with the application; extracting, from the received verification request, a name and an address associated with the application; searching in a database, based on at least one of the extracted name and address, for reference information associated with the application; and generating a verification response that is sent to the device of the first user, so as to alert the first user to a risk of interacting with the application.
(22) The non-transitory computer-readable medium of (21), wherein the searching further comprises retrieving, based on the extracted name, a trusted address associated with the application, and the generating further comprises, when no trusted address is retrieved, or the retrieved trusted address does not match the extracted address, generating the verification response, which warns the first user that interacting with the application is not safe.
(23) The non-transitory computer-readable medium of (22), wherein the method further comprises: receiving, from a device of a second user, a registration request associated with the application, the registration request including a particular address associated with the application; determining whether the second user is entitled to register the application; and in response to a positive determination result, updating the database by storing the particular address as the trusted address associated with the application.
(24) The non-transitory computer-readable medium of (23), wherein the determining further comprises: acquiring, from the network, a public key of a public-private key pair with which the application was deployed on the network, determining, based on the acquired public key, whether the device of the second user uses a corresponding private key of the public-private key pair to prove that the second user has ownership of the application, and when the device of the second user uses the corresponding private key to prove the second user has the ownership of the application, determining that the second user is entitled to register the application.
(25) The non-transitory computer-readable medium of (22), wherein the method further comprises: obtaining, from an authorized source, a particular address associated with the application; and updating the database by storing the particular address as the trusted address associated with the application.
(26) The non-transitory computer-readable medium of (21), wherein the searching further comprises retrieving, based on the extracted name or address, a record that labels the application as suspicious, and the generating further comprises generating, based on the retrieved record, the verification response, which warns the first user that interacting with the application is not safe.
(27) The non-transitory computer-readable medium of (26), wherein the method further comprises: obtaining, from an authorized source, information indicating that there is a risk to interact with the application; and updating the database by creating the record, which labels the application as suspicious.
(28) The non-transitory computer-readable medium of (23), wherein the method further comprises: calculating, based on an analysis of data in the database, a trustworthiness score associated with the application; and updating the database with the calculated trustworthiness score, as the reference information associated with the application.
(29) The non-transitory computer-readable medium of (28), wherein the calculating further comprises calculating the trustworthiness score based on at least one of: a number of applications that have been registered by the second user, without a rug-pull event occurring on the applications, and a number of transactions that have been performed with the application, the larger the number of applications that have been registered by the second user without a rug-pull event is, the higher the trustworthiness score associated with the application is, and the larger the number of transactions that have been performed with the application is, the higher the trustworthiness score associated with the application is.
(30) The non-transitory computer-readable medium of (21), wherein the method further comprises: receiving, from a device of a third user, a query request with respect to the application; determining, based on the received query request, a search condition; searching in the database, based on the determined search condition, to generate a search result with respect to the application; and sending, to the device of the third user, the generated search result with respect to the application.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments of the disclosure are not intended to be limiting. Rather, any limitations to embodiments of the disclosure are presented in the following claims.

## Claims

1. A method for verifying an application deployed on a network, comprising:
receiving, from a device of a first user, a verification request for verifying the application, the device being used by the first user to initiate an interaction with the application;
extracting, from the received verification request, a name and an address associated with the application;
searching in a database, based on at least one of the extracted name and address, for reference information associated with the application; and
generating a verification response that is sent to the device of the first user, so as to alert the first user to a risk of interacting with the application.

2. The method of claim 1, wherein
the searching further comprises retrieving, based on the extracted name, a trusted address associated with the application, and
the generating further comprises, when no trusted address is retrieved, or the retrieved trusted address does not match the extracted address, generating the verification response, which warns the first user that interacting with the application is not safe.

3. The method of claim 2, further comprising:
receiving, from a device of a second user, a registration request associated with the application, the registration request including a particular address associated with the application;
determining whether the second user is entitled to register the application; and
in response to a positive determination result, updating the database by storing the particular address as the trusted address associated with the application.

4. The method of claim 3, wherein the determining further comprises:
acquiring, from the network, a public key of a public-private key pair with which the application was deployed on the network,
determining, based on the acquired public key, whether the device of the second user uses a corresponding private key of the public-private key pair to prove that the second user has ownership of the application, and
when the device of the second user uses the corresponding private key to prove the second user has the ownership of the application, determining that the second user is entitled to register the application.

5. The method of claim 2, further comprising:
obtaining, from an authorized source, a particular address associated with the application; and
updating the database by storing the particular address as the trusted address associated with the application.

6. The method of claim 1, wherein
the searching further comprises retrieving, based on the extracted name or address, a record that labels the application as suspicious, and
the generating further comprises generating, based on the retrieved record, the verification response, which warns the first user that interacting with the application is not safe.

7. The method of claim 6, further comprising:
obtaining, from an authorized source, information indicating that there is a risk to interact with the application; and
updating the database by creating the record, which labels the application as suspicious.

8. The method of claim 3, further comprising:
calculating, based on an analysis of data in the database, a trustworthiness score associated with the application; and
updating the database with the calculated trustworthiness score, as the reference information associated with the application.

9. The method of claim 8, wherein the calculating further comprises calculating the trustworthiness score based on at least one of:
a number of applications that have been registered by the second user, without a rug-pull event occurring on the applications, and
a number of transactions that have been performed with the application,
the larger the number of applications that have been registered by the second user without a rug-pull event is, the higher the trustworthiness score associated with the application is, and
the larger the number of transactions that have been performed with the application is, the higher the trustworthiness score associated with the application is.

10. The method of claim 1, further comprising:
receiving, from a device of a third user, a query request with respect to the application;
determining, based on the received query request, a search condition;
searching in the database, based on the determined search condition, to generate a search result with respect to the application; and
sending, to the device of the third user, the generated search result with respect to the application.

11. An apparatus for verifying an application deployed on a network, comprising:
circuitry configured to
receive, from a device of a first user, a verification request for verifying the application, the device being used by the first user to initiate an interaction with the application,
extract, from the received verification request, a name and an address associated with the application,
search in a database, based on at least one of the extracted name and address, for reference information associated with the application, and
generate a verification response that is sent to the device of the first user, so as to alert the first user to a risk of interacting with the application.

12. The apparatus of claim 11, wherein the circuitry is further configured to:
retrieve, based on the extracted name, a trusted address associated with the application, and
when no trusted address is retrieved, or the retrieved trusted address does not match the extracted address, generate the verification response, which warns the first user that interacting with the application is not safe.

13. The apparatus of claim 12, wherein the circuitry is further configured to:
receive, from a device of a second user, a registration request associated with the application, the registration request including a particular address associated with the application,
determine whether the second user is entitled to register the application, and
in response to a positive determination result, update the database by storing the particular address as the trusted address associated with the application.

14. The apparatus of claim 13, wherein the circuitry is further configured to:
acquire, from the network, a public key of a public-private key pair with which the application was deployed on the network,
determine, based on the acquired public key, whether the device of the second user uses a corresponding private key of the public-private key pair to prove that the second user has ownership of the application, and
when the device of the second user uses the corresponding private key to prove the second user has the ownership of the application, determine that the second user is entitled to register the application.

15. The apparatus of claim 12, wherein the circuitry is further configured to:
obtain, from an authorized source, a particular address associated with the application, and
update the database by storing the particular address as the trusted address associated with the application.

16. The apparatus of claim 11, wherein the circuitry is further configured to:
retrieve, based on the extracted name or address, a record that labels the application as suspicious, and
generate, based on the retrieved record, the verification response, which warns the first user that interacting with the application is not safe.

17. The apparatus of claim 16, wherein the circuitry is further configured to:
obtain, from an authorized source, information indicating that there is a risk to interact with the application, and
update the database by creating the record, which labels the application as suspicious.

18. The apparatus of claim 13, wherein the circuitry is further configured to:
calculate, based on an analysis of data in the database, a trustworthiness score associated with the application, and
update the database with the calculated trustworthiness score, as the reference information associated with the application.

19. The apparatus of claim 18, wherein the circuitry is further configured to calculate the trustworthiness score based on at least one of:
a number of applications that have been registered by the second user, without a rug-pull event occurring on the applications, and
a number of transactions that have been performed with the application,
the larger the number of applications that have been registered by the second user without a rug-pull event is, the higher the trustworthiness score associated with the application is, and
the larger the number of transactions that have been performed with the application is, the higher the trustworthiness score associated with the application is.

20. The apparatus of claim 11, wherein the circuitry is further configured to:
receive, from a device of a third user, a query request with respect to the application;
determine, based on the received query request, a search condition,
search in the database, based on the determined search condition, to generate a search result with respect to the application, and
send, to the device of the third user, the generated search result with respect to the application.
